# EUROPEAN PATENT APPLICATION

(11) **EP 2 648 440 A1**
(43) Date of publication of application: **09.10.2013**
(21) Application number: 10860147.7
(22) Date of filing: 30.11.2010
(51) Int. Cl.: H04W 24/00

(54) **METHOD, TERMINAL DEVICE AND BASE STATION FOR REPORTING RADIO LINK FAILURE INFORMATION**

(71) Applicant: Fujitsu Limited, Kawasaki-shi, Kanagawa 211-8588 (JP)
(72) Inventor: LU, Yanling, Beijing 100025 (CN)
(74) Representative: Ward, James Norman
(86) International application number: PCT/CN2010/079271
(87) International publication number: WO 2012/071704

(57) **Abstract**

A method for reporting radio link failure information, terminal equipment and eNB. The method comprises: receiving by a terminal equipment a request for reporting radio link failure information transmitted by a network side; reporting radio link failure information to the network side by the terminal equipment according to the request, such that the network side performs radio link failure cause analysis according to the radio link failure information reported by the terminal equipment; the radio link failure information comprising: link quality measurement report for serving carriers, the carrier identification information of secondary carriers, and link quality measurement report for neighboring cells, when link failure occurs. With the embodiments of the present invention, the network side may obtain a measurement report including carrier identification information, thereby avoiding miss judgment, and effectively performing radio link failure cause analysis.

## Description

### Technical Field

The present invention relates to the field of communications, and in particular to a method for reporting radio link failure information, terminal equipment and eNB.

### Background Art

Radio link failure is an instantaneous state of a terminal equipment. In an LTE (long-term evolution) system, events triggering the radio link failure may comprise: unsynchronization in uplink being detected within a period of time by a terminal equipment, a problem occurring in a random access procedure of a media access control (MAC) layer, or a maximum time of retransmission being reached in a radio link control (RLC) layer. If any of the above events occurs, it is deemed that link failure occurs. After radio link failure, the terminal equipment either enters into an idle state, only monitoring downlink information of the eNB and being unable to perform uplink data transmission, or initiates a link reestablishment process, reestablishing a link with the network side.

There are many causes for radio link failure, i.e. events triggering the radio link failure, which are described below by way of examples.

For example, for a handover procedure, in normal cases, it is necessary for a terminal equipment to hand over at a certain suitable timing when the link with the source eNB becomes worse and the link with the target eNB tends better, it should be avoided to handover too late for fear of occurrence of radio link failure due to too poor link quality of the source eNB, and it also should be avoided to handover too early for fear of occurrence of radio link failure when the terminal equipment finds that the link quality of the target eNB is not good enough after it hands over. At this moment, the terminal equipment has to hand over back to the source eNB or to another eNB.

Another example, in networking by an operator, if an area of not completely covered, a coverage "blind spot" shall occur. When the terminal equipment moves from an area with relatively better coverage to a blind spot, it is possible that radio link failure occurs between it and the source eNB before a suitable eNB is found. If the terminal equipment moves to an area with coverage, it needs to reestablish a link with an eNB capable of providing coverage.

Judgment of cause of radio link failure is very important to the optimization of a radio network. Cause analysis of radio link failure is normally performed at a network side. When cause analysis of radio link failure is performed at a network side, the terminal equipment is needed to report related information of radio link failure via an air interface, so that the network side analyzes the cause of radio link failure by using the related information, and performs optimization of the network with corresponding measures.

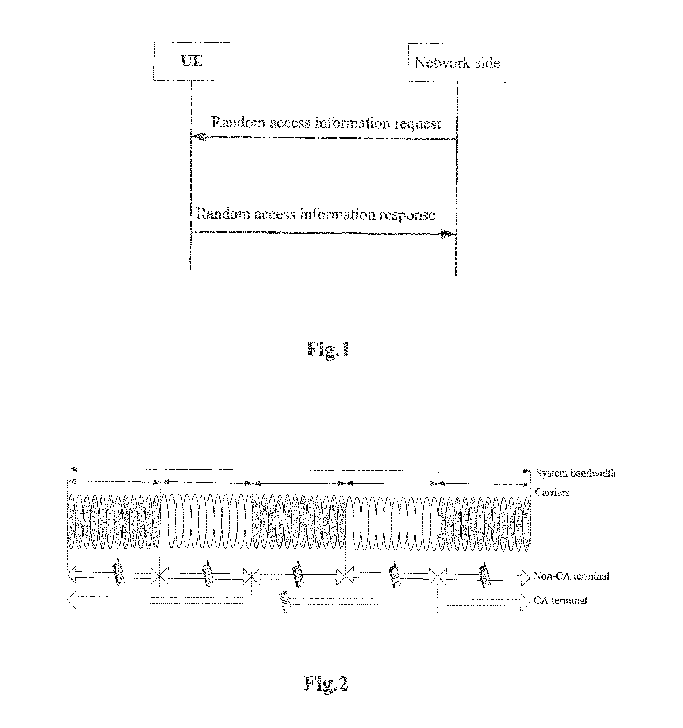

Fig. 1 is a flowchart for reporting radio link failure information by a terminal equipment to a network side in a single-carrier system. As shown in Fig. 1, the network side, normally the eNB, transmits a request to the UE for reporting latest link measurement report when radio link failure occurs, and the request may be transmitted via a UE Information Request message; and after receiving the request, the UE reports the measurement report to the eNB via a UE Information Response message; wherein following information may be included in the measurement report:
1) link quality between serving cells where link failure occurs; and 2) link quality of neighboring cells when link failure occurs.

The network side performs cause analysis after obtaining the measurement report, determines that the link failure is possibly caused by a coverage blind spot if the link quality between the current serving cells is relatively poor and the link quality between the neighboring cells is also relatively poor when the link failure occurs, and determines that the link failure is possibly caused by handing over too late if the link quality between the serving cells is relatively poor and the link quality between the some neighboring cells is relatively better when the link failure occurs. In this way, the network side may adopt corresponding optimization measures according to the above causes.

In optimization, if the analysis result of the network side is that, the cause for the radio link failure is that the terminal equipment hands over too early or too late , it is determined that a problem possibly exists in the setting of parameter for judging handover timing in the handover procedure, and the parameter is adjusted according to the analysis result. For example, if the link quality between the terminal equipment and the source eNB is less than a predefined threshold value A , the link quality between the terminal equipment and the target eNB is greater than a predefined threshold value B, and such a state lasts a predefined time T, then the eNB, based on the report of the terminal equipment, informs the terminal equipment to perform handover. If the threshold value A is set too low, handover may perform too late; otherwise, handover may perform too early. If the threshold value B is set too high, handover may perform too late; otherwise, handover may perform too early. And also, the same problems also exist for the time T. If the time is too long, handover may perform too late, and if the time is too short, handover may perform too early. Thus, the parameters A, B and T need to be adjusted according to the analysis result.

For example, if the analysis result of the network side is that the cause for the radio link failure is that coverage blind spot occurs in the network, then measures of increasing number of eNBs, increasing transmission power of an eNB, and adjusting antenna direction angles, etc. are adopted so as to guarantee the completeness of the coverage.

Fig. 2 is a schematic diagram of carrier aggregation. As shown in Fig. 2, in a carrier aggregation (CA) system, the terminal equipment may operate within a bandwidth of at most 100 MHz, and 5 carriers may be aggregated, that is, the terminal equipment may simultaneously occupies 5 serving carriers within the same cell. In multiple carriers, only one of them is a primary carrier, and others are secondary carriers. In general cases, a carrier with better channel quality is selected as the primary carrier. Therefore, for each terminal equipment, the primary carrier may be changed. When it is needed to change the primary carrier in the same cell, handover procedure is necessary. Therefore, in a multicarrier system, link handover is more complex than that in a single-carrier system.

For example, for a certain of terminal equipment, multiple serving carriers, that is, one primary carrier and one or more secondary carriers, serve for the terminal equipment; hence, radio link failure possibly occur on each of the carriers. Furthermore, besides the handover between different cells, handover is also needed when the primary carrier is changed within the same cell. In these handover procedures, there also exists a problem of handing over too late or too early. Likewise, a problem of coverage blind spot also exists in a multicarrier system.

In the implementation of the present invention, the inventors found that following defects exist in the prior art: in a multicarrier system, if the method shown in Fig. 1 is still used to report link failure information, it may lead to miss judgment at the network side when the network side analyzes the cause for the failure by using the obtained reported related information, resulting in that the corresponding measures cannot be used for network optimization.

For example, when handover is performed because of the change of the primary carrier of the terminal equipment, if the handover is performed too late, the terminal equipment performs link reestablishment at the target primary carrier (the original secondary carrier) after link failure occurs at the source primary carrier. As the terminal equipment is possibly not located at the edge of the cell when the primary carrier changes, the channel quality with the neighboring cells is also relatively poor. And if the terminal equipment reports only the link measurement quality on the source primary carrier and the link measurement quality of the neighboring cells when link failure occurs, the network side will consider that the terminal equipment performs link reestablishment on another carrier after link failure occurs on a carrier; and at the same time, as both of the link quality of the terminal equipment on the source primary carrier and the link quality of the terminal equipment with the neighboring cells are relatively poor, the network side determines that the radio link failure is possibly caused by a coverage blind spot. This is obviously a judgment error.

In addition, no solution for solving the above problems is provided in the prior art.

Following documents are listed for the easy understanding of the present invention and conventional technologies, which are incorporated herein by reference as they are fully stated in this text.
1. 3GPP TS 36.321 V9.3.0(2010-06) Medium Access Control(MAC) Protocol specification(Release 9); and
2. 3GPP TS 36.331 V9.4.0(2010-09) Radio Resource Control (RRC) Protocol specification (Release 9).

### Summary of the Invention

The object of the embodiments of the present invention is to provide a method for reporting radio link failure information, terminal equipment and eNB. The terminal equipment may report, to a network side, radio link failure information comprising link quality measurement report for serving carriers, the carrier identification information of secondary carriers, and link quality measurement report for neighboring cells, when link failure occurs, such that the network side performs radio link failure cause analysis according to the reported radio link failure information, thereby avoiding miss judgment and solving the problems existing in the prior art.

According to an aspect of the embodiments of the present invention, there is provided a method for reporting radio link failure information, comprising: receiving by a terminal equipment a request for reporting radio link failure information transmitted by a network side; and reporting radio link failure information to the network side by the terminal equipment according to the request, such that the network side performs radio link failure cause analysis according to the radio link failure information reported by the terminal equipment; wherein the radio link failure information comprises:
link quality measurement report for serving carriers, the carrier identification information of secondary carriers, and link quality measurement report for neighboring cells, when link failure occurs.

According to another aspect of the embodiments of the present invention, there is provided a method for reporting radio link failure information, comprising:
transmitting by an eNB to a terminal equipment a request for instructing the terminal equipment to report radio link failure information; receiving the radio link failure information fed back by the terminal equipment according to the request, such that a network side performs radio link failure cause analysis according to the reported radio link failure information; wherein the radio link failure information comprises:
link quality measurement report for serving carriers, the carrier identification information of secondary carriers, and link quality measurement report for neighboring cells, when link failure occurs.

According to another aspect of the embodiments of the present invention, there is provided a terminal equipment, comprising:
a first receiving unit to receive a request for instructing the terminal equipment to report radio link failure information transmitted by a network side;
a first transmitting unit to report the radio link failure information to the network side according to the request received by the first receiving unit, such that the network side performs radio link failure cause analysis according to the reported radio link failure information; the radio link failure information comprises:
   link quality measurement report for serving carriers, the carrier identification information of secondary carriers, and link quality measurement report for neighboring cells, when link failure occurs.

According to a further aspect of the embodiments of the present invention, there is provided an eNB, comprising:
a second transmitting unit to transmit to a terminal equipment a request for performing the terminal equipment to report radio link failure information;
a second receiving unit to receive the radio link failure information fed back by the terminal equipment according to the request, such that the eNB performs radio link failure cause analysis according to the reported radio link failure information; wherein the radio link failure information comprises:
link quality measurement report for serving carriers, the carrier identification information of secondary carriers, and link quality measurement report for neighboring cells, when link failure occurs.

According to still another aspect of the embodiments of the present invention, there is provided a computer-readable program, wherein when the program is executed in a terminal equipment, the program enables the computer to carry out the above method for reporting radio link failure information in the terminal equipment.

According to still another aspect of the embodiments of the present invention, there is provided a storage medium in which a computer-readable program is stored, wherein the computer-readable program enables the computer to carry out the above method for reporting radio link failure information in a terminal equipment.

According to still another aspect of the embodiments of the present invention, there is provided a computer-readable program, wherein when the program is executed in an eNB, the program enables the computer to carry out the method for reporting radio link failure information in the eNB.

According to still another aspect of the embodiments of the present invention, there is provided a storage medium in which a computer-readable program is stored, wherein the computer-readable program enables the computer to carry out the above method for reporting radio link failure information in an eNB.

The advantages of the embodiments of the present invention exist in: in a multicarrier system, the terminal equipment may report, to a network side, radio link failure information comprising link quality measurement report for serving carriers, the carrier identification information of secondary carriers, and link quality measurement report for neighboring cells, when link failure occurs, such that the network side obtains a complete link quality measurement report and performs radio link failure cause analysis by using the reported radio link failure information, thereby avoiding miss judgment and solving the problems existing in the prior art.

Particular embodiments of the invention have been disclosed in detail with reference to the following description and drawings and are indicative of some of the ways in which the principles of the invention may be employed, but it is understood that the invention is not limited correspondingly in scope. Rather, the invention includes all changes, modifications and equivalents coming within the spirit and terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Figure 1 is a flowchart for reporting radio link failure information by a terminal equipment to a network side in a single-carrier system;
Figure 2 is a schematic diagram of carrier aggregation in a carrier aggregation system;
Figure 3 is a flowchart of reporting radio link failure information in accordance with the first embodiment of the present invention;
Figure 4 is a flowchart of reporting radio link failure information in accordance with the second embodiment of the present invention;
Figure 5 is a flowchart of reporting radio link failure information in accordance with the third embodiment of the present invention;
Figure 6 is a schematic structural diagram of a terminal equipment in accordance with the fourth embodiment of the present invention; and
Figure 7 is a schematic structural diagram of an eNB in accordance with the fifth embodiment of the present invention.

### Detailed Description of the Invention

The embodiments of the present invention are described as follows with reference to the drawings. These embodiments are illustrative only, and are intended to limit the present invention. For easy understanding of the principle and embodiments of the present invention by those skilled in the art, the embodiments of the present invention shall be described taking a multicarrier system in an LTE-A system as an example. However, it should be understood the present invention is not limited thereto, and is also applicable to any systems where positions of occurrence of radio link failure are not unique.

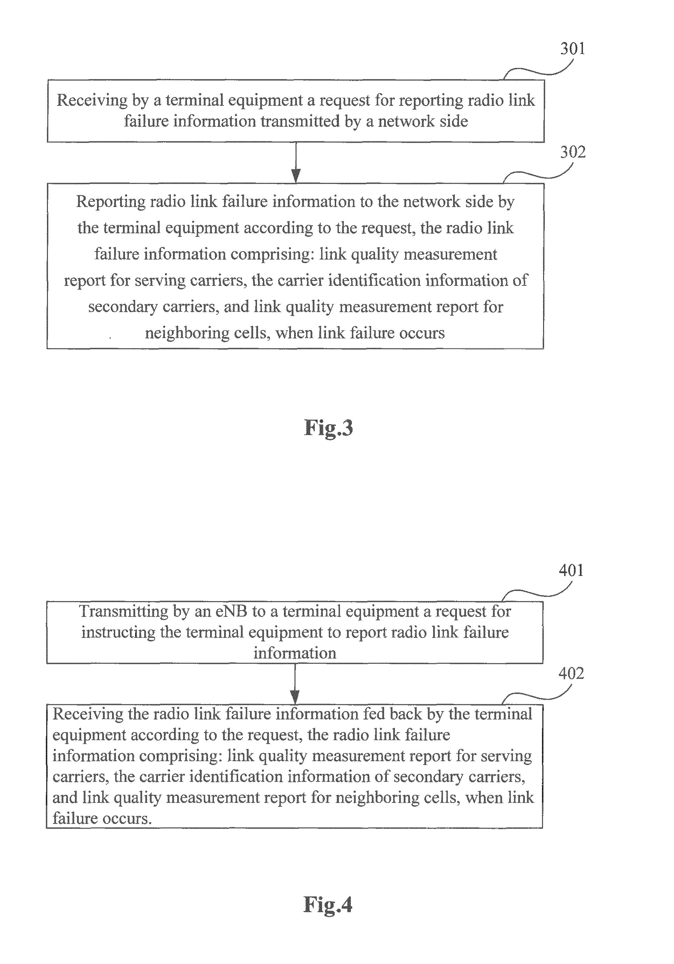

Fig. 3 is a flowchart of reporting radio link failure information in accordance with the first embodiment of the present invention. As shown in Fig. 3, the method comprises:
step 301: receiving by a terminal equipment a request for reporting radio link failure information transmitted by a network side;
step 302: reporting radio link failure information to the network side by the terminal equipment according to the request, such that the network side performs radio link failure cause analysis according to the radio link failure information reported by the terminal equipment; the radio link failure information comprising:
   link quality measurement report for serving carriers, the carrier identification information of secondary carriers, and link quality measurement report for neighboring cells, when link failure occurs.

In this embodiment, in step 301, the network side, such as an eNB, may use a UE Information Request message to transmit the request; and in step 302, after receiving the request, the terminal equipment returns radio link failure information via a UE Information Response message. However, it is limited thereto, and any other messages may be used to transmit the request and return radio link failure information.

In this embodiment, when link failure occurs, the link quality measurement report for the serving carriers comprises: link quality measurement report on serving carriers where radio link failure occurs and link quality measurement report on other serving carriers in the cell when radio link failure occurs. Wherein the carriers where radio link failure occurs may be a primary carrier, and may also be secondary carriers.

In this embodiment, when omission of carrier identification information of the primary carrier is committed between the eNB and the terminal equipment, the radio link failure information does not comprise carrier identification information of the primary carrier. Therefore, when the link quality measurement report received by the eNB has no corresponding carrier identification information, the eNB may determine according to the commitment that the link quality measurement report is the link measurement report on the primary carrier.

In this embodiment, when the eNB and the terminal equipment make no commitment, the radio link failure information further comprises carrier identification information of the primary carrier. Thus, the radio link failure information may comprise: link quality measurement report forall the serving carriers , carrier identification information of all the serving carriers and link quality measurement report on neighboring cells, when radio link failure occurs.

It can be seen from the above embodiment that in a multicarrier system, the network side may obtain complete radio link failure information by using the above method, and performs cause analysis of radio link failure by using the link quality measurement report, thereby avoiding miss judgment and solving the problems existing in the prior art.

Fig. 4 is a flowchart of reporting radio link failure information in accordance with the second embodiment of the present invention. As shown in Fig. 4, the method comprises:
step 401: transmitting by an eNB to a terminal equipment a request for instructing the terminal equipment to report radio link failure information;
step 402: receiving the radio link failure information fed back by the terminal equipment according to the request, such that a network side performs radio link failure cause analysis according to the reported radio link failure information; wherein the radio link failure information comprises:
   link quality measurement report for serving carriers, the carrier identification information of secondary carriers, and link quality measurement report for neighbouring cells, when link failure occurs.

In this embodiment, in step 401, the eNB may use a UE Information Request message to transmit the request; and in step 402, the terminal equipment returns radio link failure information via a UE Information Response message. However, it is limited thereto, and any other messages may be used to transmit the request and return radio link failure information.

In this embodiment, the eNB may be an eNB with which the terminal equipment performs link reestablishment.

In this embodiment, in case that the eNB and the terminal equipment commit in advance not to report the carrier identification information of the primary carrier, when the link quality measurement report received by the eNB does not contain corresponding carrier identification information, the eNB may determine according to the commitment that the link quality measurement report is the link measurement report on the primary carrier.

In this embodiment, when the eNB and the terminal equipment make no commitment, the radio link failure information may further comprise carrier identification information of the primary carrier. Thus, the radio link failure information may comprise: link quality measurement report for all the serving carriers, carrier identification information of all the serving carriers and link quality measurement report on neighboring cells, when radio link failure occurs.

In this embodiment, when the eNB receives the radio link failure information, the eNB may directly perform cause analysis on the radio link failure according to the radio link failure information. Furthermore, the eNB may transmit the link quality result to other functional entities of the network side, and the cause analysis on the radio link failure is performed by the other functional entities according to the radio link failure information.

Therefore, the method may further comprise: transmitting the radio link failure information by the eNB to other functional entities of the network side, such that the other functional entities of the network side perform radio link failure cause analysis according to the reported radio link failure information.

It can be seen from the above embodiment that in a multicarrier system, the network side may obtain complete radio link failure information by using the above method, and performs cause analysis of radio link failure by using the link quality measurement report, thereby avoiding miss judgment and solving the problems existing in the prior art.

In the above embodiment, the terminal equipment may detect whether link failure occurs in a real-time manner, and the link failure occurring at the terminal equipment is also known to the network side. When the network side learns that link failure occurs at the terminal equipment, it may transmit to the terminal equipment a request for instructing the terminal equipment to report radio link failure information, and the terminal equipment reports the radio link failure information to the network side according to the request, such that the network side performs radio link failure cause analysis according to the radio link failure information, finally achieving optimization of the network.

Following detailed description is given for the method for reporting radio link failure information taking that the eNB instructs the terminal equipment to report radio link failure information in a multicarrier system as an example.

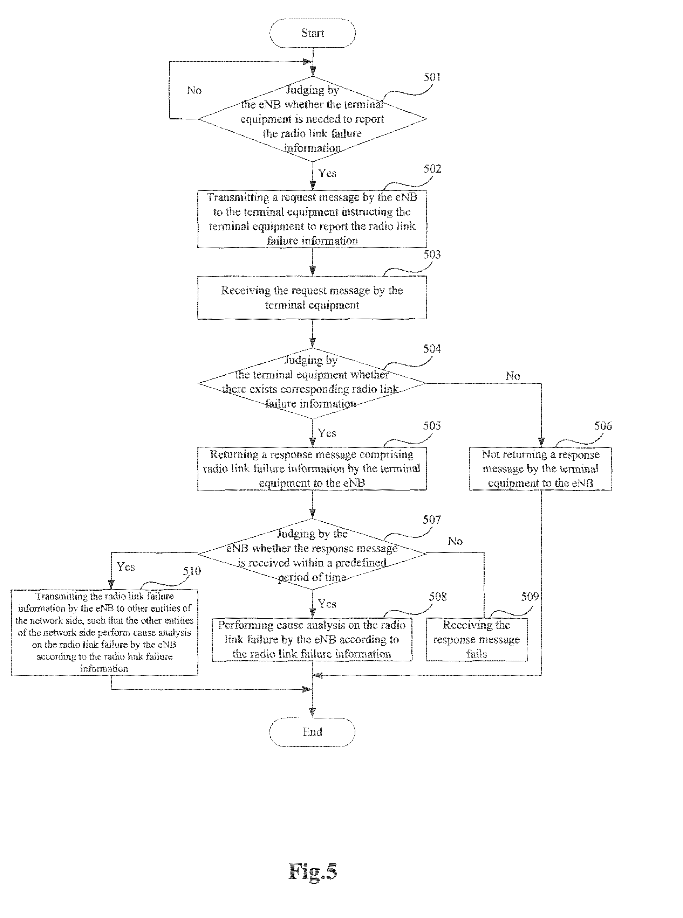

Fig. 5 is a flowchart of reporting radio link failure information in accordance with the third embodiment of the present invention. As shown in Fig. 5, the method comprises:
step 501: judging by the eNB whether the terminal equipment is needed to report the radio link failure information; if the result of judgment is positive, executing step 502; otherwise, proceeding with judgment;
wherein, the eNB may judge according to an instruction transmitted by an entity of the network side whether the terminal equipment is needed to report the radio link failure information; that is, if an instruction transmitted by an entity of the network side is received, it may determine that the terminal equipment is needed to report the radio link failure information; otherwise, it may determine that the terminal equipment is not needed to report the radio link failure information; the entity of the network side may be the eNB itself, or an eNB where radio link failure occurs, or another functional entity of the network side, such as a network management entity;
step 502: transmitting a request message by the eNB to the terminal equipment instructing the terminal equipment to report the radio link failure information, if the eNB determines in step 501 that the terminal equipment is needed to report the radio link failure information;
wherein the request message may use a UE Information Request message;
step 503: receiving the request message by the terminal equipment;
step 504: judging by the terminal equipment whether there exists corresponding radio link failure information; and executing step 505 if the result of judgment is positive; otherwise, executing step 506;
wherein, the terminal equipment may detect whether link failure occurs in a real-time manner, and the link failure occurring at the terminal equipment is also known to the network side; however, as the link failure occurs, since the time between the last time of measurement before the occurrence of the link failure and the detection of the link failure is too long, the terminal equipment may consider that this time of measurement is ineffective to the link failure, hence, there is no corresponding link measurement quality result; thus, even though radio link failure occurs, it is possible that corresponding radio link failure information does not exist at the terminal equipment;
step 505: returning a response message by the terminal equipment to the eNB if the result of judgment in step 504 is positive, the response message comprising radio link failure information;
wherein the response message of the terminal equipment may use a UE Information Response message;
when omission of carrier identification information of the primary carrier is committed between the eNB and the terminal equipment, the radio link failure information may comprise: link quality measurement report for all the serving carriers, carrier identification information of the secondary carriers and link quality measurement report on neighboring cells, when radio link failure occurs;
when the eNB and the terminal equipment make no commitment, the radio link failure information may further comprise carrier identification information of the primary carrier; thus, the radio link failure information may comprise: link quality measurement report for all the serving carriers, carrier identification information to which all the serving carriers correspond and link quality measurement report on neighboring cells, when radio link failure occurs.
step 506: not returning a response message by the terminal equipment to the eNB if the result of judgment in step 504 is negative, or returning the response message, with the content in the response message being blank;
step 507: judging by the eNB after step 505 whether the response message is received within a predefined period of time; and executing step 508 if the result of judgment is positive; otherwise, executing step 509;
step 508: performing cause analysis on the radio link failure by the eNB according to the radio link failure information if the result of judgment in step 507 is positive, so as to perform optimization of the network;
step 509: determining that receiving the response message fails if the result of judgment in step 507 is negative, thereby terminating the process.

In the above embodiment, the eNB is taken as an entity of the network side for performing radio link failure cause analysis; besides, other entities of the network side, such as a network management entity, may perform the above analysis. In such a case, as shown in Fig. 5, the method may further comprise:
step 510: transmitting the radio link failure information by the eNB to other entities of the network side if the result of judgment in step 507 is positive, so that other entities of the network side perform analysis using the radio link failure information to optimize the network.

It can be seen from the above embodiment that the network side may transmit a request to the terminal equipment for instructing the terminal equipment to report radio link failure information; the terminal equipment reports the radio link failure information to the network side according to the request, such that the network side obtains radio link failure information comprising carrier identification, a link measurement report on all the carriers of the cell where the terminal equipment is present and a link measurement report on neighboring cells when the link failure occurs, and performs radio link failure cause analysis according to the radio link failure information, thereby avoiding miss judgment, finally achieving optimization of the network, and solving the problems existing in the prior art.

In a multicarrier system, the terminal equipment performs link reestablishment at another carrier after link failure occurs at the source primary carrier. After the link reestablishment, if the terminal equipment reports the radio link failure information comprising a link measurement report for all the serving carriers, corresponding carrier identification and a link measurement quality report on neighboring cells when the link failure occurs, according to the request of the network side, the network side may judge the cause for the link failure according to the radio link failure information reported by the terminal equipment.

For example, if the measurement quality of the links between the terminal equipment and all the serving carriers of the cell where the terminal equipment is present when the link failure occurs are all relatively poor and the measurement quality of the links between the terminal equipment and the neighboring cells are also relatively poor, the network side may determine that the link failure is possibly caused by a coverage blind spot.

If the measurement quality of the links between the terminal equipment and all the serving carriers of the cell where the terminal equipment is present when the link failure occurs are all relatively poor and the measurement quality of the link between the terminal equipment and a certain neighboring cell is relatively better, and the primary carrier after handover is at the neighboring cell, the network side may determine that the link failure is possibly caused by handing over too late between the cells.

And if the measurement quality of the link at the source primary carrier is relatively poor and the measurement quality of the link between the terminal equipment and a certain secondary carrier is relatively better, and the primary carrier after handover is still at the original cell, the link failure is highly possibly caused by handing over too late within the cells (the primary carrier is changed), no matter whether the measurement quality of the neighboring cells is relatively better or not.

Therefore, the network side performs radio link failure cause analysis according to the radio link failure information reported by the terminal equipment, thereby avoiding miss judgment, finally achieving optimization of the network, and solving the problems existing in the prior art.

It should be understood by those skilled in the art that all or part of the steps in the methods of the above embodiments may be implemented by related hardware instructed by a program, and the program may be stored in a computer-readable storage medium. In executing the program, all or part of the steps in the methods of the above embodiments may be included, and the storage medium may comprise an ROM, an RAM, a floppy disk, and a compact disk, etc.

An embodiment of the present invention provides also an eNB and a terminal equipment as described below. As the principles of the eNB and the terminal equipment for solving problems are similar to those of the method for reporting radio link failure information based on an eNB and terminal equipment as described above, the implementation of the method may be referred to for the implementation of the eNB and the terminal equipment, and the repeated parts shall not be described further.

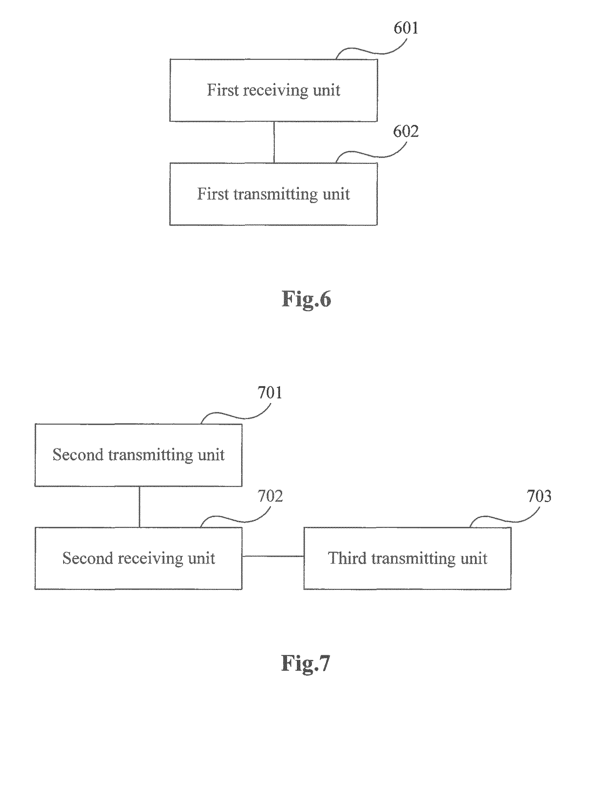

Fig. 6 is a schematic structural diagram of terminal equipment in accordance with the fourth embodiment of the present invention. As shown in Fig. 6, the terminal equipment comprises a first receiving unit 601 and a first transmitting unit 602; wherein
the first receiving unit 601 is used to receive a request for instructing the terminal equipment to report radio link failure information transmitted by a network side; and
the first transmitting unit 602 is used to report the radio link failure information to the network side according to the request received by the first receiving unit, such that the network side performs radio link failure cause analysis according to the reported radio link failure information; the radio link failure information comprises:
link quality measurement report for serving carriers of the cell where the terminal equipment is present, the carrier identification information of secondary carriers in the serving carriers, and link quality measurement report for the neighbouring cell of the cell where the terminal equipment is present, when link failure occurs.

In this embodiment, when link failure occurs, the link quality measurement report on the serving cells of the cell where the terminal equipment is present comprises: link quality measurement report on serving carriers where radio link failure occurs and link quality measurement report on other serving carriers in the cell when radio link failure occurs. Wherein the carriers where radio link failure occurs may be a primary carrier, and may also be secondary carriers.

In this embodiment, when omission of carrier identification information of the primary carrier is committed between the eNB and the terminal equipment, the radio link failure information does not comprise carrier identification information of the primary carrier. Therefore, when the link quality measurement report received by the eNB does not contain corresponding carrier identification information, the eNB may determine according to the commitment that the link quality measurement report is the link measurement report on the primary carrier.

In this embodiment, when the eNB and the terminal equipment make no commitment, the radio link failure information further comprises carrier identification information of the primary carrier. Thus, the radio link failure information may comprise: link quality measurement report on all the serving carriers of the cell where the terminal equipment is present, carrier identification information of all the serving carriers and link quality measurement report on neighboring cells of the cell where the terminal equipment is present, when radio link failure occurs.

Furthermore, the terminal equipment may comprise a storage unit (not shown) for storing the above carrier identification information and radio link failure information.

Fig. 7 is a schematic structural diagram of an eNB in accordance with the fifth embodiment of the present invention. As shown in Fig. 7, the eNB comprises: a second transmitting unit 701 and a second receiving unit 702; wherein
the second transmitting unit 701 is used to transmit to a terminal equipment a request for performing the terminal equipment to report radio link failure information; and
the second receiving unit 702 is to receive the radio link failure information fed back by the terminal equipment according to the request, such that the eNB performs radio link failure cause analysis according to the reported radio link failure information; wherein the radio link failure information comprises:
link quality measurement report for serving carriers of the cell where the terminal equipment is present, the carrier identification information of secondary carriers in the serving carriers, and link quality measurement report for the neighbouring cell of the cell where the terminal equipment is present, when link failure occurs.

In this embodiment, the eNB may be an eNB with which the terminal equipment perform a link reestablishment.

In this embodiment, in case that the eNB and the terminal equipment commit in advance not to report the carrier identification information of the primary carrier, when the link quality measurement report received by the eNB has no corresponding carrier identification information, the eNB may determine according to the commitment that the link quality measurement report is the link measurement report on the primary carrier.

In this embodiment, when the eNB and the terminal equipment make no commitment, the radio link failure information may further comprise carrier identification information of the primary carrier. Thus, the radio link failure information may comprise: link quality measurement report on all the serving carriers of the cell where the terminal equipment is present, carrier identification information of all the serving carriers of the cell and link quality measurement report on neighboring cells of the cell where the terminal equipment is present, when radio link failure occurs.

Furthermore, the eNB may perform cause analysis on the radio link failure as an entity of the network side, and furthermore, the cause analysis on the radio link failure may also be performed by other entities of the network side. Therefore, the eNB may further comprise a third transmitting unit 703 used to transmit the radio link failure information to other entities of the network side, such that the other entities of the network side perform radio link failure cause analysis according to the reported radio link failure information.

It can be seen from the above embodiment that the network side may transmit a request to the terminal equipment for instructing the terminal equipment to report radio link failure information; the terminal equipment reports the radio link failure information to the network side according to the request, such that the network side performs radio link failure cause analysis according to the radio link failure information, thereby avoiding miss judgment, finally achieving optimization of the network, and solving the problems existing in the prior art.

An embodiment of the present invention provides also a computer-readable program, wherein when the program is executed in a terminal equipment, the program enables the computer to carry out the method for reporting radio link failure information as described in the first embodiment in the terminal equipment.

An embodiment of the present invention provides also a storage medium in which a computer-readable program is stored, wherein the computer-readable program enables the computer to carry out the method for reporting radio link failure information as described in the first embodiment in a terminal equipment.

An embodiment of the present invention provides also a computer-readable program, wherein when the program is executed in an eNB, the program enables the computer to carry out the method for reporting radio link failure information as described in the second embodiment in the eNB.

An embodiment of the present invention provides also a storage medium in which a computer-readable program is stored, wherein the computer-readable program enables the computer to carry out the method for reporting radio link failure information as described in the second embodiment in an eNB.

The above devices and methods of the present invention may be implemented by hardware, and may also be implemented by hardware in combination with software. The present invention relates to such a computer-readable program that when the program is executed by a logic component, it enables the logic component to implement the devices or constitutional parts as described above, or enables the logic component to implement the methods or steps as described above. The present invention relates also to a storage medium for storing the above program, such as a hard disk, a floppy disk, a CD, and flash memory, etc.

The present invention are described above in conjunction with the embodiments, however, it will be apparent to those skilled in the art that such description is exemplary only and is not limitative to the protection scope of the present invention. Various variations and modifications may be made by those skilled in the art without departing from the spirits and principle of the present invention, which will fall within the protection scope of the present invention.

## Claims

1. A method for reporting radio link failure information, comprising:
receiving by a terminal equipment a request for reporting radio link failure information transmitted by a network side;
reporting radio link failure information to the network side by the terminal equipment according to the request, such that the network side performs radio link failure cause analysis according to the radio link failure information reported by the terminal equipment; the radio link failure information comprising:
link quality measurement report for serving carriers, the carrier identification information of secondary carriers, and link quality measurement report for neighboring cells, when link failure occurs.

2. The method according to claim 1, wherein the radio link failure information further comprises the identification information of the primary carriers in the serving carriers.

3. A method for reporting radio link failure information, comprising:
transmitting by an eNB to terminal equipment a request for instructing the terminal equipment to report radio link failure information;
receiving the radio link failure information fed back by the terminal equipment according to the request, such that a network side performs radio link failure cause analysis according to the reported radio link failure information; wherein the radio link failure information comprises:
link quality measurement report for serving carriers, the carrier identification information of secondary carriers, and link quality measurement report for neighboring cells, when link failure occurs.

4. The method according to claim 3, wherein the radio link failure information further comprises the identification information of the primary carriers in the serving carriers.

5. The method according to claim 3 or 4, wherein the method further comprises:
transmitting the radio link failure information by the eNB to other functional entities of the network side, such that the other functional entities of the network side perform radio link failure cause analysis according to the reported radio link failure information.

6. A Terminal equipment, comprising:
a first receiving unit to receive a request for instructing the terminal equipment to report radio link failure information transmitted by a network side;
a first transmitting unit to report the radio link failure information to the network side according to the request received by the first receiving unit, such that the network side performs radio link failure cause analysis according to the reported radio link failure information; the radio link failure information comprises:
link quality measurement report for serving carriers, the carrier identification information of secondary carriers, and link quality measurement report for neighboring cells, when link failure occurs.

7. The terminal equipment according to claim 6, wherein the radio link failure information further comprises the identification information of the primary carriers in the serving carriers.

8. An eNB, comprising:
a second transmitting unit to transmit to terminal equipment a request for performing the terminal equipment to report radio link failure information;
a second receiving unit to receive the radio link failure information fed back by the terminal equipment according to the request, such that the eNB performs radio link failure cause analysis according to the reported radio link failure information; wherein the radio link failure information comprises:
link quality measurement report for serving carriers, the carrier identification information of secondary carriers, and link quality measurement report for neighboring cells, when link failure occurs.

9. The eNB according to claim 8, wherein the radio link failure information further comprises the identification information of the primary carriers in the serving carriers.

10. The eNB according to claim 8 or 9, wherein the eNB further comprises a third transmitting unit to transmit the radio link failure information to other functional entities of a network side, such that the other functional entities of the network side perform radio link failure cause analysis according to the reported radio link failure information.

11. A computer-readable program, wherein when the program is executed in terminal equipment, the program enables the computer to carry out the method for reporting radio link failure information as claimed in claim 1 or 2 in the terminal equipment.

12. A storage medium in which a computer-readable program is stored, wherein the computer-readable program enables the computer to carry out the method for reporting radio link failure information as claimed in claim 1 or 2 in terminal equipment.

13. A computer-readable program, wherein when the program is executed in an eNB, the program enables the computer to carry out the method for reporting radio link failure information as claimed in claim 3 or 4 or 5 in the eNB.

14. A storage medium in which a computer-readable program is stored, wherein the computer-readable program enables the computer to carry out the method for reporting radio link failure information as claimed in claim 3 or 4 or 5 in an eNB.
